# EUROPÄISCHE PATENTANMELDUNG

(11) **EP 3 764 512 A1**
(43) Veröffentlichungstag der Anmeldung: **13.01.2021**
(21) Anmeldenummer: 20183099.9
(22) Anmeldetag: 30.06.2020
(51) Int. Cl.: H02K 3/38, H02K 3/52, H02K 15/095

(54) **STATOR EINES ELEKTROMOTORS UND VERFAHREN ZU SEINER HERSTELLUNG**

(30) Priorität: 10.07.2019 DE 102019210146
(71) Anmelder: Bühler Motor GmbH, 90459 Nürnberg (DE)
(72) Erfinder: BRETTSCHNEIDER, Jürgen, 90482 Nürnberg (DE); BONK, Georg, 90522 Oberasbach (DE); Appel, Andeas, 90431 Nürnberg (DE)

(57) **Zusammenfassung**

Die Erfindung betrifft einen Stator (1) eines Elektromotors mit einem Statorkern (2) mit mehreren ausgeprägten Statorpolen (3), einer Isolierkappe (4), einer aus einem Wicklungsdraht (5) bestehenden Statorwicklung (6) und einem Verschaltungsmittel (7) mit mehreren Wicklungsdraht-Aufnahmen (8). Aufgabe der Erfindung ist es einen Stator eines Elektromotors darzustellen, der eine sehr hohe Qualität und Genauigkeit aufweist, so dass Hochstromanwendungen möglich sind. Weiter soll er möglichst radial und axial bauraumsparend und einfach aufgebaut sein. Der Stator soll ohne größere Anpassungen mit unterschiedlichen Wicklungsverschaltungen kombinierbar sein und flexibel an das übrige Motor und evtl. Elektronikdesign anpassbar sein. Das Fertigungsverfahren soll flexibel an unterschiedliche Drahtdurchmesser angepasst werden können. Diese Aufgabe wird erfindungsgemäß durch die Merkmale des Anspruchs 1 gelöst.

## Beschreibung

Die Erfindung betrifft einen Stator (1) eines Elektromotors mit einem Statorkern (2) mit mehreren ausgeprägten Statorpolen (3), einer Isolierkappe (4), einer aus einem Wicklungsdraht (5) bestehenden Statorwicklung (6) und einem Verschaltungsmittel (7) mit mehreren Wicklungsdraht-Aufnahmen (8).

Aus der EP 3 442 100 A1 ist ein Stator mit einer Verschaltungseinheit bekannt. Diese besteht aus drei unterschiedlich geformten und abgewinkelten Stanzblechen mit Wicklungsdraht-Aufnahmen besteht. Durch die unterschiedliche Geometrie werden mehrere Stanzwerkzeuge zu ihrer Herstellung benötigt. Die Abwinklungen erfordern zusätzlich ein Werkzeug mit Biegefunktion. Weiter erfordern diese einen größeren axialen Bauraum.

Aufgabe der Erfindung ist es einen Stator eines Elektromotors darzustellen, der eine sehr hohe Qualität und Genauigkeit aufweist, so dass Hochstromanwendungen möglich sind. Weiter soll er möglichst radial und axial bauraumsparend und einfach aufgebaut sein. Der Stator soll ohne größere Anpassungen mit unterschiedlichen Wicklungsverschaltungen kombinierbar sein und flexibel an das übrige Motor und evtl. Elektronikdesign anpassbar sein. Das Fertigungsverfahren soll flexibel an unterschiedliche Drahtdurchmesser angepasst werden können.

Diese Aufgabe wird erfindungsgemäß durch die Merkmale des Anspruchs 1 gelöst. Da der Wicklungsdraht (5) von dem Material einer Wicklungsdraht-Aufnahme (8) umgeben und mit diesem innig verbunden und verschweißt ist, bleibt der Drahtquerschnitt erhalten und wird durch das umgebende Material der Wicklungsdraht-Aufnahme sicher mechanisch fixiert.

Weiterbildungen der Erfindung werden in den Unteransprüchen dargestellt. Um einen möglichst geringen axialen Aufbau zu erhalten besteht das Verschaltungsmittel aus einem Kontaktblech.

Weiter ist vorgesehen, dass der Wicklungsdraht (5) in der Blechebene von dem Material der Wicklungsdraht-Aufnahme (8)vollumfänglich umgeben ist, wobei der Wicklungsdraht (5) die Blechebene über die volle Blechdicke durchdringt. Dabei umgibt die Wicklungsdraht-Aufnahme (8) den Wicklungsdraht (5) nicht durch mechanisches Umformen, sondern durch einen Schmelzprozess.

Bei mehrphasigen Motoren sind mehrere flache Bleche vorgesehen, die durch eine ebenso flache Papierisolierung elektrisch voneinander isoliert sind. Statt einer Papierisolierung können die Bleche der Verschaltungsmittel auch lackiert sein oder durch ein anderes Flachmaterial mit guten Isolationseigenschaften abgedeckt sein.

Weiter ist vorgesehen, dass je Verschaltungsmittel (7) ein Anschluss (9) vorgesehen ist. Dieser kann einfach stumpf auf eine Blechebene des Verschaltungsmittels geschweißt werden. Hierfür eignet sich Laserschweißen, weil der Laserstrahl sehr genau geführt werden und dosiert werden kann. Der Anschluss sollte eine zylindrische Form aufweisen. Dadurch lassen sich, wie bei vielen Anwendungen erforderlich, wesentlich einfachere und zuverlässigere Durchführungsdichtungen realisieren. Bei weniger hohen Anforderungen lässt sich aus dem Blechmaterial auch ein Teilbereich als Anschlussmittel abwinkeln.

Es hat sich als zweckmäßig herausgestellt die Verschaltungsmittel auf ein Trägermittel zu montieren. Hierdurch lässt sich eine kompakte und einfacher justierbare Baugruppe bilden. Diese Baugruppe kann mit Vorsprüngen oder Ausnehmungen an die Form der Isolierkappe angepasst werden.

Bei Verwendung mehrerer Verschaltungsmittel lassen sich diese identisch oder unterschiedlich ausbilden.

Zweckmäßigerweise besteht der Wicklungsdraht (5) und das Verschaltungsmittel (7) aus dem gleichen Material, insbesondere Kupfer.

Die Aufgabe der Erfindung wird weiter durch ein Verfahren mit folgenden Merkmalen gelöst:
a) Bereitstellen eines Statorkerns (2), einer Isolierkappe (4), einer Endkappe (39), eines Wicklungsdrahts (5), eines Trägermittels (10) und eines Verschaltungsmittels (7) oder einer Verschaltungseinheit mit integriertem Trägermittel und Verschaltungsmittel, einer Wickeleinrichtung und einer Laserschweißeinrichtung;
b) Montage der Isolierkappe (4) und der Endkappe (39)auf jeweils einen axialen Endbereich (11) des Statorkerns (2));
c) Bewickeln eines Statorpols (3) des Stators (1) mit dem Wicklungsdraht (5), wobei der Wicklungsdraht (5) zwischen zwei Polen mit einer radialen Komponente über den Durchmesser des Statorkerns hinaus um einen Ausleger (16) herum und unter Bildung einer Leiterschleife (12) winkelversetzt zu einem nachfolgend zu bewickelnden Statorpol (3) radial nach innen geführt wird;
d) Abisolieren von Wicklungsdrahtbereichen (40) der Leiterschleife (12) unter in Positionshalten und freie Zugänglichkeit durch den Ausleger (16).
e) lagerichtige Montage des Trägermittels (10) und des Verschaltungsmittels (7) oder der Verschaltungseinheit mit integriertem Trägermittel und Verschaltungsmittel, wobei die Winkellage der Wicklungsdraht-Aufnahmen (8) den Winkellagen des nach außen bzw. nach innen verlaufenden Wicklungsdrahts entspricht;
e) Abisolieren von Wicklungsdrahtbereichen (40) der Leiterschleife (12);
f) Biegen der Leiterschleife (12) unter Zuhilfenahme Trägermittel (10) radial nach innen, bis die Wicklungsdrahtbereiche (40) der Leiterschleifen (12) in durch Kontaktzungen (24) begrenzte Wicklungsdraht-Aufnahmen (8) des Verschaltungsmittels (7) eingreifen;
g) Erhitzen der Kontaktzungen (24) beiderseits der Wicklungsdraht-Aufnahme (8) vor, nach oder während dem Trennen der Leiterschleife (12) mittels Laserstrahl bis diese schmelzen und sich das Schmelzgut (37) innig mit dem Wicklungsdraht (5) verbindet und verschweißt;
h) Vorheriges oder anschließendes Entfernen eines oder mehrerer Ausleger (16) gleichzeitig oder nacheinander oder des Hilfsmittels zur temporären Unterstützung der Leiterschleife (12) ;
i) Montage weiterer Bauelemente oder Baugruppen;

Ein oder mehrere Verschaltungsmittel (7) kann/können auf ein Trägermittel (10) montiert werden, wobei das Trägermittel (10) vorher auf die Isolierkappe (4) montiert wurde. Alternativ können ein oder mehrere Verschaltungsmittel (7) mit einem Trägermittel (10) zu einer Baugruppe vormontiert sein. Das Trägermittel (10) ist erforderlich, um Biegekanten (38) für ein definiertes Biegen der Leiterschleifen (12) darzustellen.

Beim Abisolieren des Isolationslacks wird vorzugsweise ein Laserstrahl über den abzuisolierenden Wicklungsdrahtbereich (40) gerastert. Hierbei wird entweder der Laserstrahl umgelenkt oder der Stator entsprechend bewegt.

Die Ausleger (16) sind als einstückige Bestandteile der Isolierkappe (4) vorgesehen und dienen zur temporären Fixierung der unter Zugspannung stehenden Leiterschleifen (12). Die Fixierung ist erforderlich um eine ausreichende Prozesssicherheit für folgende Verfahrensschritte zu gewährleisten.

Gemäß einem wesentlichen Merkmal der Erfindung werden vor allem die Klemmzungen (24) von dem Laserstrahl erhitzt wird, wodurch diese partiell zum Schmelzen gebracht wird. Doch auch der Wicklungsdraht 5 wird durch den Laserstrahl mit erhitzt, jedoch mit geringerer Intensität. Dadurch besteht keine Gefahr eines Querschnittverlusts durch das Schweißen. Die ursprünglich radial offene Wicklungsdraht-Aufnahme (8) ist nach dem Schweißvorgang geschlossen und der Wicklungsdraht (5) vom Schmelzgut umgeben, welches aus dem Material der Kontaktzungen (24) gewonnen wurde. Beim Schweißen wird der Laserstrahl abwechselnd auf beide Kontaktzungen (24) und auch kurzzeitig auf den Wicklungsdraht (5) gelenkt. Dadurch erhitzen sich die aufzuschmelzenden Bereiche gleichmäßig. Dies führt zu einer hohen Qualität der Schweißverbindung.

Durch die Verlegung von Drahtabschnitten radial nach außen lassen sich die Verschaltungsmittel einfach nach dem Bewickeln des Stators ohne umständliches Einfädeln einlegen. Nuten in der Isolierkappe verhindern eine ungünstige Verlagerung der zu verschweißenden Abschnitte des Wicklungsdrahts. Weiter lässt sich das Trägermittel (10) durch aufeinander abgestimmte Anformungen oder Rücksprünge zuverlässig ausrichten.

Zum Zwecke der Bauraumeinsparung ist es empfehlenswert die Leiterschleife (12) nach dem Schweißen zu entfernen. Bei Verwendung eines Pulslasers lassen sich die Leiterschleifen (12) auch mit Hilfe des Laserstrahls entfernen. Alternativ können die Leiterschleifen (12) einfach mit einem Schneidwerkzeug abgetrennt werden.

Um die hohe Qualität der Schweißverbindung sicher zu stellen, ist vorgesehen, dass die Leiterschleife (12) während des Schweißvorgangs radial nach innen in die Wicklungsdraht-Aufnahme (8) anliegend gehalten wird. Hierdurch ergeben sich stets die gleichen Bedingungen und daher eine gleichbleibend hohe Schweißqualität.

Die Verschaltungsmittel (7) können durch eine Isolierschicht voneinander elektrisch isoliert sein. Diese Isolierschicht kann mit dem Verschaltungsmittel (7) fest verbunden sein oder lose zwischen zwei Verschaltungsmittel (7) gelegt werden. Im zuletzt genannten Fall müssen zusätzlich Isolierringe bereitgestellt werden, die dann nach der Montage des ersten Verschaltungsmittels (7) abwechselnd mit weiteren Verschaltungsmitteln (7) aufeinandergeschichtet werden.

Alternativ hierzu kann das Trägermittel (10) und mehrere Verschaltungsmittel (7) auch zu einer Baugruppe vorgefertigt sein und als solche montiert werden.

Hierfür kann das Trägermittel (10) und mehrere Verschaltungsmittel (7) als Einlegeteile in einer Spritzgussmaschine mit isolierendem Kunststoffmaterial umspritzt werden. Eine Zusätzliche Isolierung ist nicht erforderlich, sofern die einzelnen Verschaltungsmittel mit einem geringen Abstand in der Spritzgussform gehalten werden.

Das Trägermittel (10) muss aber nicht notwendigerweise vorgefertigt werden und als Einlegeteil mit dem oder den Verschaltungsmittel/n (7) verbunden werden, sondern es kann beim Umspritzen des Verschaltungsmittels/der Verschaltungsmittel (7) mitgeformt werden.

Der Stator kann für alle Verschaltungsarten ausgeführt werden.

Die Erfindung ist nicht auf einteilige Statoren begrenzt, sondern umfasst auch Polketten oder Einzelpole.

Ausführungsbeispiele der Erfindung werden nachfolgend anhand der Zeichnung näher erläutert. Es zeigen:
Fig. 1 eine räumliche Darstellung eines Stators nach einer Bewicklung,
Fig. 2 eine Draufsicht auf den Stator mit einem Verschaltungsmittel vor einem Verschaltungsvorgang,
Fig. 3 eine Seitenansicht des Stators mit dem Verschaltungsmittel vor dem Verschaltungsvorgang (zwei Ansichten),
Fig. 4 eine Seitenansicht des Stators nach einem Umformvorgang,
Fig. 5 eine Seitenansicht des Stators nach einem Schweißvorgang,
Fig. 6 eine Seitenansicht und eine Draufsicht auf das Verschaltungsmittel,
Fig. 7 eine Draufsicht und eine Seitenansicht eines Trägermittels,
Fig. 8 eine Unteransicht des Trägermittels,
Fig. 9 eine Schnittansicht des Trägermittels mit Wicklungsdraht,
Fig. 10 eine Seitenansicht des Stators nach dem Umformvorgang mit abgetrennten Auslegern,
Fig. 11 eine Seitenansicht des Stators nach dem Schweißvorgang mit abgetrennten Auslegern,
Fig. 12 eine Draufsicht auf Fig. 109,
Fig. 13 eine Draufsicht auf Fig. 11,
Fig. 14 eine Detaildarstellung einer Leiterschleife vor dem Schweißvorgang und
Fig. 15 eine Detaildarstellung der Leiterschleife nach dem Schweißvorgang.

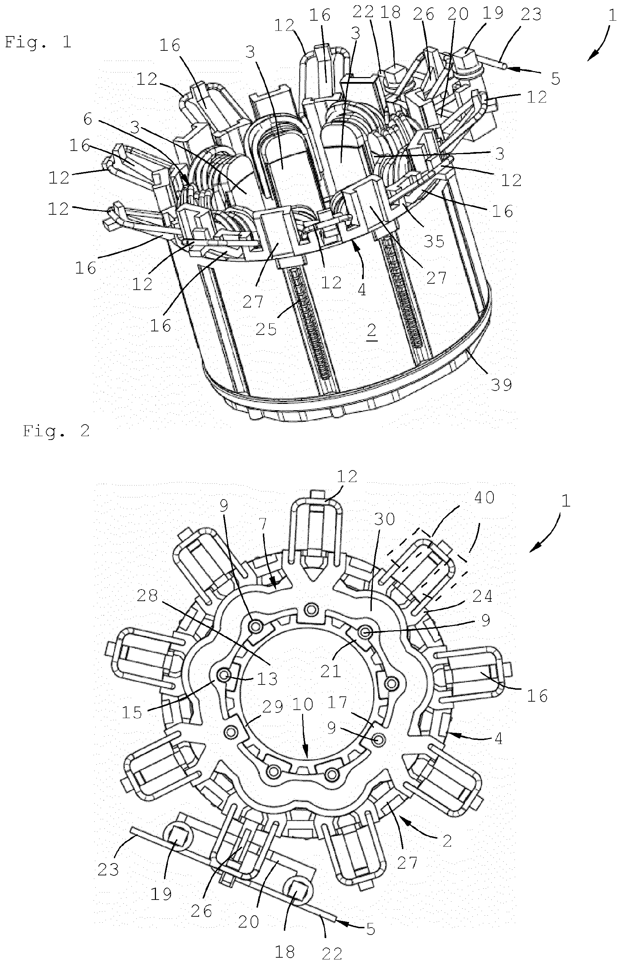

Fig. 1 zeigt eine räumliche Darstellung eines Stators 1 eines Elektromotors mit einem Statorkern 2, einer Isolierkappe 4 und einer Endkappe 39 nach der Bewicklung einer Mehrzahl von Statorpolen 3 mit einem Wicklungsdraht 5 zur Bildung von Statorspulen einer Statorwicklung 6. Von der Isolierkappe 4 erstrecken sich Ausleger 16 schräg nach außen an denen axial und radial nach außen geführten Leiterschleifen 12, die eine Drahtverbindung zwischen benachbarten Spulen der Statorwicklung 6 darstellen aufliegen. Ein Wicklungsanfang 22 ist um einen Startzapfen 18 gelegt und über einen Zusatzausleger 26 zu einem Statorpol 3 geführt. Nach der Bewicklung aller Statorpole 3 ist ein Wicklungsende 23 um einen Endzapfen 19 gelegt und abgeschnitten. Der Startzapfen 18 und der Endzapfen 19 sind mit einem Querträger 20, einem Zusatzausleger 26 und der Isolierkappe 4 einstückig. Weiter sind axial vorspringende Führungsmittel 27 zu erkennen, die im Winkelsegment der Statorpole 3 angeordnet sind. Diese bilden eine seitliche Führung für die Leiterschleifen 12 während des Herstellungsprozesses.

Fig. 2 zeigt eine Draufsicht auf den Stator mit Verschaltungsmitteln 7 vor einem Verschaltungsvorgang, mit dem Statorkern 2, der Isolierkappe 4 einem Trägermittel 10 und den Leiterschleifen 12 der Statorwicklung. Die Isolierkappe 4 weist die Führungsmittel 27, die Ausleger 16, den Querträger 20, den Startzapfen 18 und den Endzapfen 19 auf. Die Führungsmittel 27 sind im Winkelbereich der Statorpole angeordnet und führen das Trägermittel 10 bei seiner Montage und richten dieses in Bezug auf die Statorpole aus. Das Trägermittel 10 weist eine zentrale Ausnehmung 28 auf, welche außen durch einen Versteifungsring 29 begrenzt ist. Der Versteifungsring 29 begrenzt Rücksprünge 21, in welche Haltezungen 17 der Verschaltungsmittel 7 eingreifen. Hierdurch wird eine lagerichtige Montage auf das Trägermittel 10 erreicht. Jedes Verschaltungsmittel 7 ist mit einem Anschluss 9 verbunden und durch Haltezapfen 13 mit dem Trägermittel 10 verbunden. Jedes Verschaltungselement 7 weist einen mit Einbuchtungen 15 für Haltezapfen 13 bzw. Anschluss 9 versehenen Busring 30 auf. Die Verschaltungsmittel 7 weisen jeweils drei Paare von sich radial nach außen erstreckenden gabelförmige Kontaktzungen 24 auf, welche als Kontaktgabel mit nach außen offenen Wicklungsdraht-Aufnahmen 8 enden. Weiter ist der Zusatzausleger 26, der Wicklungsdraht 5, der Wicklungsdrahtbereich 40, der Wicklungsanfang 22 und das Wicklungsende dargestellt.

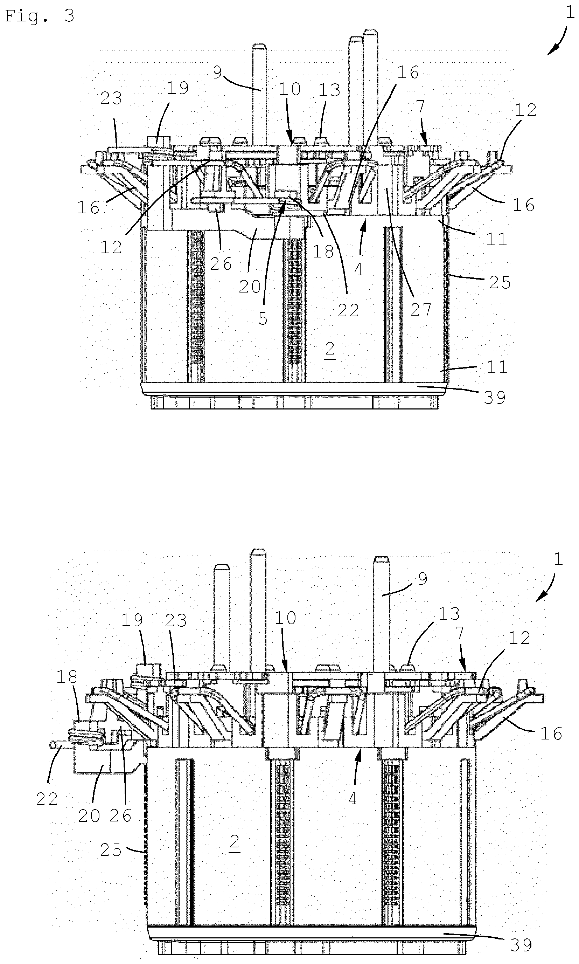

Fig. 3 zeigt zwei Seitenansichten des bewickelten Stator 1 mit den Verschaltungsmitteln 7 mit den radial und axial nach außen geführten Leiterschleifen 12 der Statorwicklung 6. Die Leiterschleifen 12 liegen an den Aufliegern 16 auf, die mit einer Isolierkappe 4 einstückig sind. Der Wicklungsanfang 22 der Statorwicklung ist mehrmals um den Startzapfen 18 gewickelt. Der Wicklungsdraht 4 der Statorwicklung ist vom Startzapfen 18 um jeweils einen Statorpol (nicht erkennbar), anschließend um einen Ausleger 16 und um einen weiteren Statorpol usw. gewickelt. Das Wicklungsende 23 ist mehrfach um den Endzapfen 19 gewickelt. Der Startzapfen 18 und der Endzapfen 19 sind über den Querträger 20 mit dem Zusatzausleger 26 einstückig. Der Wicklungsanfang 22 und das Wicklungsende (siehe Fig. 2) sind aus wickeltechnischen Gründen in unterschiedlichen Ebenen mit dem Startzapfen 18 bzw. dem Endzapfen 19 verbunden. Drei als einfache Blechschnitte ausgeführte Verschaltungsmittel 7 sind voneinander isoliert mit Hilfe von Haltezapfen 13 auf dem Trägermittel 10 montiert. Die Haltezapfen 13 sind mit dem Trägermittel 10 einstückig. Das Trägermittel 10 besteht aus einem elektrisch isolierenden Material und ist mittels eines Kunststoff-Spritzgussvorgangs hergestellt. Die Baugruppe aus Trägermittel 10 und mehreren Verschaltungsmitteln 7 ist auf die Isolierkappe 4 montiert. Die Isolierkappe 4, das Trägermittel 10 und die Verschaltungsmittel 7 weisen formschlüssig ineinandergreifende Geometrien auf, durch welche eine lagerichtige Anordnung möglich ist, wobei die gabelförmige Kontaktzungen 24 (siehe Fig. 2) der Verschaltungsmittel 7 mit dem Wicklungsdrahtverlauf und der Winkellage er Statorpole korrespondieren. Die Isolierkappe 4 ist auf den Endbereich 11 eines Statorkern 2 montiert, welcher aus einem gestanzten Blechpaket besteht. An seinem Umfang weißt der Statorkern 2 Klemmzungen 25 auf mit deren Hilfe sich der Stator in einem Motorgehäuse spielfrei verkrallen kann. Die Statorwicklung ist über den Anschluss 9 mit einer Leiterplatte verbindbar. Jedem Verschaltungsmittel 7 ist ein Anschluss 9 zugeordnet. Mechanisch sind Anschluss und Verschaltungsmittel 7 durch Laserschweißen miteinander verbunden. Weiter sind mit der Isolierkappe 4 einstückige Führungsmittel 27 und die Endkappe 39 dargestellt.

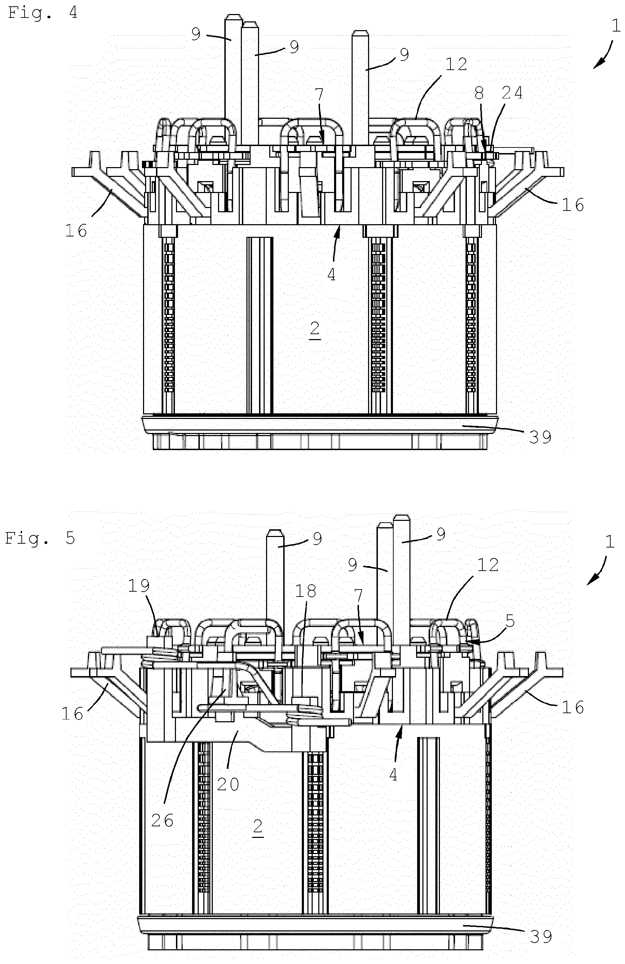

Fig. 4 zeigt eine Seitenansicht des Stators 1 nach einem Umformvorgang, mit dem Stator 2, der Isolierkappe 4, der Endkappe 39, Verschaltungsmitteln 7, Leiterschleifen 12, Auslegern 16 und Anschluss 9. Die Leiterschleifen 12 sind nach dem Umformvorgang in Wicklungsdraht-Aufnahmen 8 der Verschaltungsmittel 7 eingelegt, welche durch gabelförmige Kontaktzungen 24 begrenzt sind. Die Ausleger 16 haben jetzt keine Funktion mehr und können entfernt werden.

Fig. 5 zeigt eine Seitenansicht des Stators 1 nach einem Schweißvorgang, bei welchem die Kontaktzungen 24 (siehe Fig. 4) durch einen Laserstrahl erhitzt und zum Schmelzen gebracht wurden. Überstehendes Material jeweils zweier benachbarter Kontaktzungen 24 haben sich dabei zu einem Ring geschlossen und mit dem Wicklungsdraht 5 verbunden. Vor dem Schweißen wurde eine Lackisolierung des Wicklungsdrahts 5 entfernt. Die Abisolierung kann mechanisch oder durch einen Laserstrahl erfolgen.

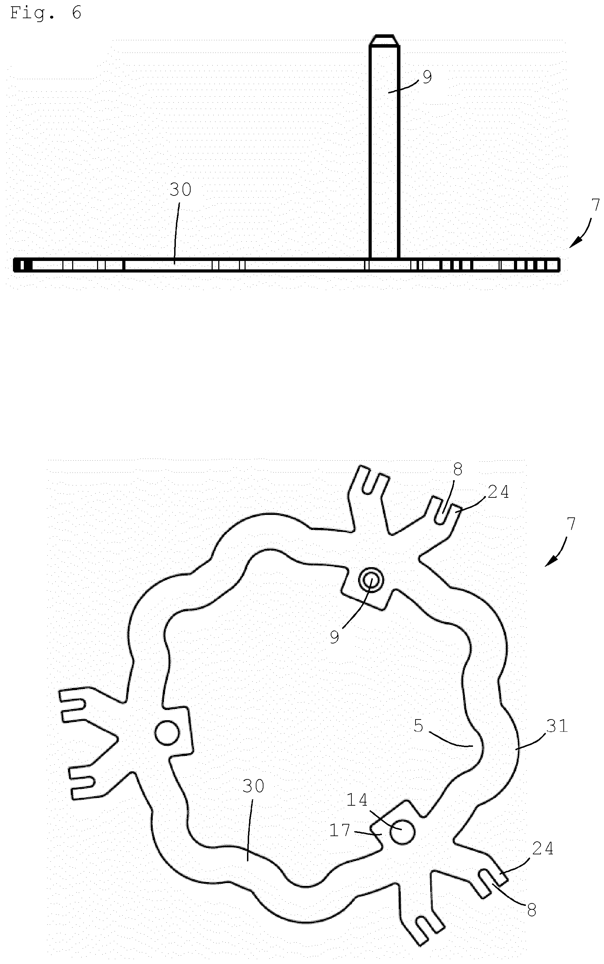

Fig. 6 zeigt eine Seitenansicht und eine Draufsicht eines Verschaltungsmittels 7. Wie deutlich zu erkennen ist besteht das Verschaltungsmittel 7 lediglich aus einem flachen Blechschnitt, ohne abgebogene oder abgekröpfte Teile. Hierdurch lassen sich mehrere Verschaltungsmittel sehr bauraumsparend hintereinander montieren. Jedes Verschaltungsmittel 7 ist mit einem Anschluss 9 verschweißt.

Das Verschaltungsmittels 7 weist die Form eines mäanderförmigen Busringes 30, drei mit einer Lochung 14 versehene, nach innen gerichtete Haltezungen 17, Einbuchtungen 15 und drei radial nach außen gerichtete Kontaktzungen 24 mit Wicklungsdraht-Aufnahmen 8 auf. Die Wicklungsdraht-Aufnahmen 8 sind so ausgelegt, dass mindestens zwei Wicklungsdrähte darin aufgenommen werden können. Der Überstand dient beim Schweißen als Schmelzgut. Die Kontaktzungen sind über V-förmige Konturen mit dem Busring 30 einstückig. Das Verschaltungsmittel 10 besteht aus Kupfer. Der Busring 30 behält über seien Umfang weitgehend seinen Querschnitt. An den Stellen mit inneren Einbuchtungen 15 sind außen entsprechende Ausbuchtungen 31 vorhanden.

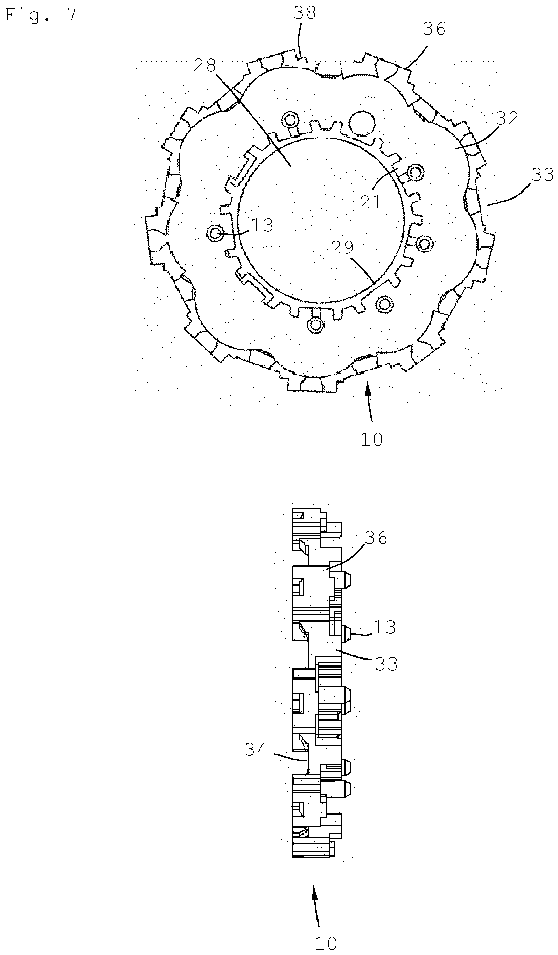

Fig. 7 zeigt eine Draufsicht und eine Seitenansicht des Trägermittels 10, mit einer zentralen Ausnehmung 28, einem diese außen begrenzenden Versteifungsring 29, Haltezapfen 13, Rücksprüngen 21 und nach außen offene radiale Freisparungen 33 zur Aufnahme von Führungsmitteln 27 der Isolierkappe 4 (siehe Fig. 2). Die Bereiche zwischen den Freisparungen 33 dienen als Abstandhalter 36 für die Leiterschleifen. An den Freisparungen 33 schließen Biegekanten 38 an, die zur Unterstützung für einen Rückbiegevorgang der Leiterschleifen während des Herstellprozesses dient.

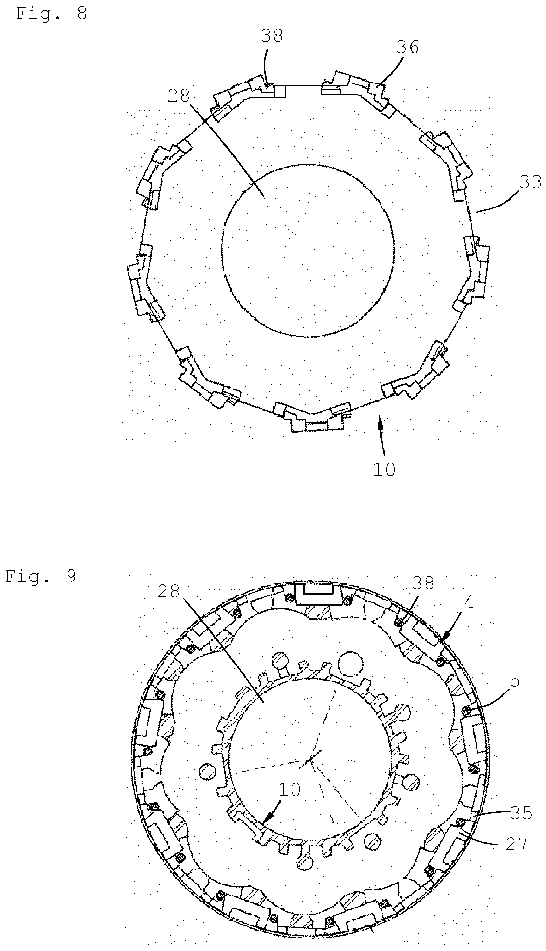

Fig. 8 zeigt eine Unteransicht des Trägermittels 10, mit der zentralen Ausnehmung 28 den radialen Aussparungen 33, den Biegekanten 38 und den Abstandhaltern 36.

Fig. 9 zeigt eine Schnittansicht des Trägermittels 10, montiert an der Isolierkappe 4 und eingelegtem Wicklungsdraht 5, welcher an den Biegekanten 38 des Trägermittels 10 anliegt. Die Isolierkappe 4 weist Führungsmittel 27 und Führungskonturen 35 auf, welche als seitliche Stütze und Führung für den Wicklungsdraht 5 dient.

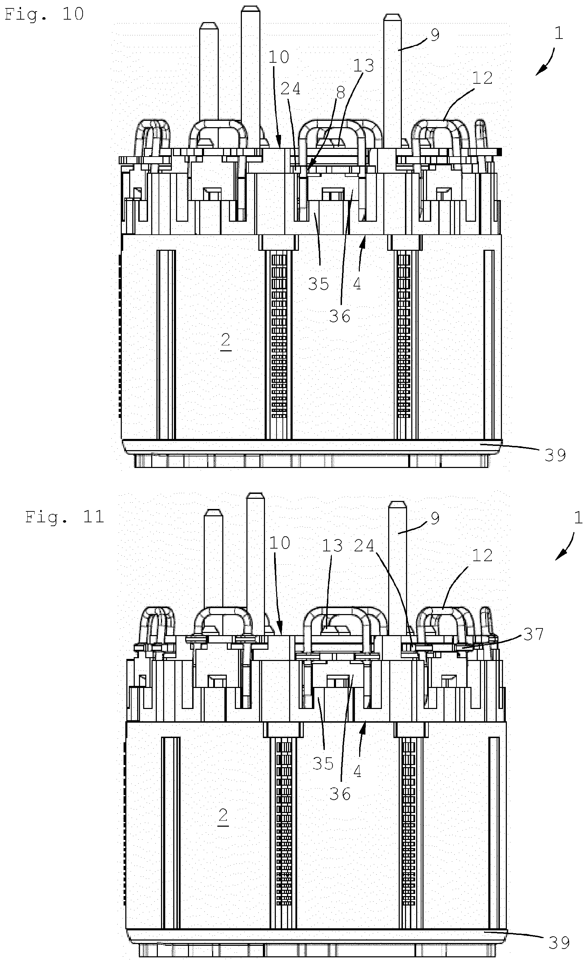

Fig. 10 zeigt den Stator 1 nach einem Biegevorgang der Leiterschleifen 12. Durch eine Führungskontur 35 werden die Leiterschleifen 12 so geführt, dass sie jeweils eine definierte Lage einnimmt. Eine Zusätzliche Führung bilden die Abstandhalter 36 des Trägermittels 10. Die jeweiligen Führungskonturen 35 und Abstandhalter 36 korrespondieren miteinander und ihre Seitenflächen werden durch das jeweils anliegende Teil verlängert. Die Führungskonturen 35 sowie die Abstandhalter 36 dienen auch als Axialanschläge für das jeweils anschließende Teil. Schließlich werden die Seitenflächen der Führungskonturen 35 und der Abstandhalter 36 durch die Wicklungsdraht-Aufnahme 8 des Verschaltungsmittels 7 verlängert. Auf diese Weise lassen sich die Leiterschleifen 12 problemlos in die Wicklungsdraht-Aufnahmen 8 fügen, indem die Leiterschleifen 12 aus einer abgewinkelten Position in eine achsparallele Position gebogen werden. In dieser Position werden die Leiterschleifen 12 festgehalten und die Kontaktzungen 24 durch einen Laserstrahl bis zum Schmelzpunkt erhitzt. Weiter sind in Fig. 10 der Statorkern 2, die Haltezapfen 13 und den Anschluss 9, die Isolierkappe 24 und die Endkappe 39 dargestellt. Die Ausleger 16 zur Aufnahme der Leiterschleifen 12 sind bereits entfernt.

In Fig. 11 ist das Resultat dieses Vorgangs dargestellt. Die über den in der Wicklungsdraht-Aufnahme 8 eingelegten Wicklungsdraht hinausragenden Bereiche der Kontaktzungen 24 wurden abgeschmolzen. Das Schmelzgut 37 schließt jetzt die vorher offene Wicklungsdraht-Aufnahme und hat sich um den Wicklungsdraht herumgelegt und geht mit diesem eine innige stoffschlüssige Verbindung ein. Die erzeugte elektrische Verbindung ist für Anwendungen mit hohen elektrischen Strömen verwendbar. Weiter sind in Fig. 11 das Trägermittel 10, die Haltezapfen 13, die Führungskonturen 35, die Abstandhalter 36, die Leiterschleifen 12, den Anschluss 9, die Isolierkappe 4 und die Endkappe 39 dargestellt.

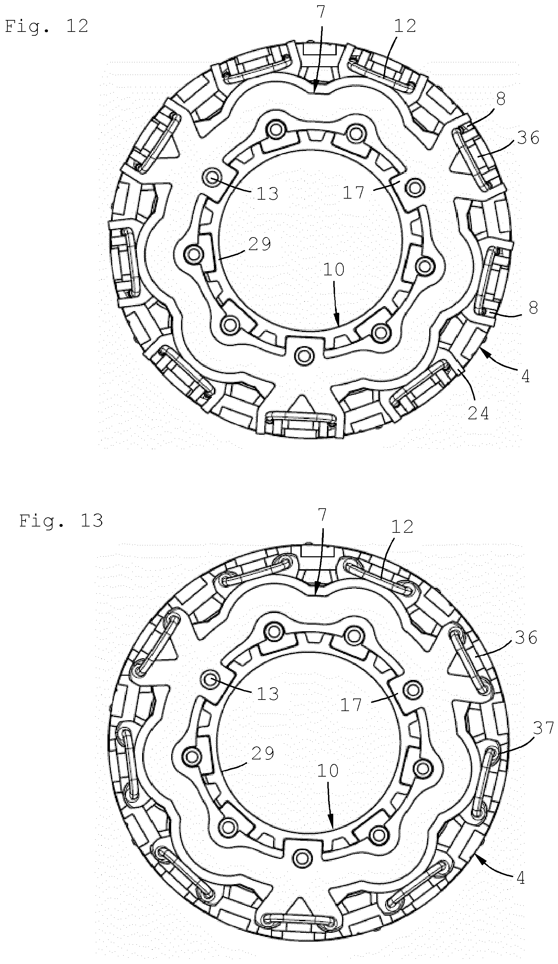

Fig. 12 zeigt eine Draufsicht auf Fig. 10, mit dem Trägermittel 10, der Isolierkappe 4, die Verschaltungsmittel 7, die Haltezapfen 13, die Haltezungen 17, die Leiterschleifen 12, die Wicklungsdraht-Aufnahmen 8, die Abstandhalter 36, den Versteifungsring 29 und die radial vorspringenden Kontaktzungen 24.

Fig. 13 zeigt eine Draufsicht auf Fig. 11, mit dem Trägermittel 10, der Isolierkappe 4, die Verschaltungsmittel 7, die Haltezapfen 13, die Haltezungen 17, die Leiterschleifen 12, die Abstandhalter 36, den Versteifungsring 29 und das Schmelzgut 37, das sich um die Wicklungsdrähte herum gelegt hat.

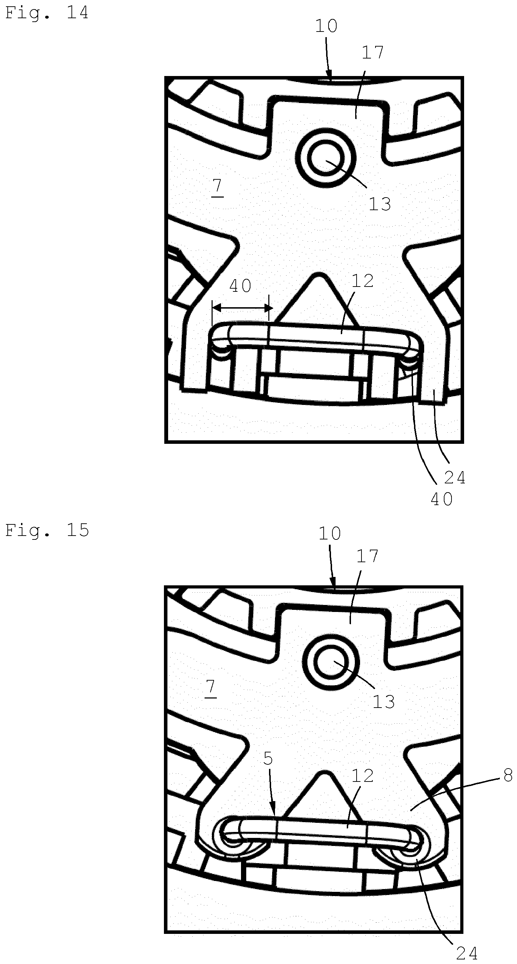

Fig. 14 zeigt eine Detaildarstellung einer Leiterschleife 12 vor dem Schweißvorgang, mit dem Trägermittel 10, dem Verschaltungsmittel 7, einem Haltezapfen 13, eine Haltezunge 17 und Wicklungsdraht-Aufnahmen 8. Wicklungsdrahtbereiche 40 der Leiterschleife 12 sind in diesem Zustand von einem Isolationslack befreit. Die Abisolierung wurde mit Hilfe eines Laserstrahls durchgeführt. Der Haltezapfen 13 ist warm umgeformt, um das Verschaltungsmittel 7 zu halten. Weiter sind Kontaktzungen 24 dargestellt, die deutlich über den eingelegten Wicklungsdraht der Leiterschleife 12 hinausragen. Dadurch ist ausreichend Material vorhanden, das sich nach dem Aufschmelzen um den Wicklungsdraht herumlegen kann.

Fig. 15 zeigt eine Detaildarstellung der Leiterschleife 12 nach dem Schweißvorgang. Der Wicklungsdraht 5 und das Verschaltungsmittel 7 bestehen aus Kupfer und lassen sich daher optimal verscheißen. Weiter sind ein Haltezapfen 13 und eine Haltzunge 17 dargestellt. Die Leiterschleife wird anschließend entfernt um Bauraum in axialer Richtung einzusparen, dies kann mechanisch durch Abscheren oder ebenfalls mittels Laserstrahl erfolgen. Beim Schweißvorgang wird der Laserstrahl zeilenweise über beide Kontaktzungen 24 geführt, dabei wird auch der Wicklungsdraht 5 dosiert miterhitzt.

### Bezugszeichenliste

- 1: Stator
- 2: Statorkern
- 3: Statorpol
- 4: Isolierkappe
- 5: Wicklungsdraht
- 6: Statorwicklung
- 7: Verschaltungsmittel
- 8: Wicklungsdraht-Aufnahme
- 9: Anschluss
- 10: Trägermittel
- 11: Endbereich
- 12: Leiterschleife
- 13: Haltezapfen
- 14: Lochung
- 15: Einbuchtung
- 16: Ausleger
- 17: Haltezunge
- 18: Startzapfen
- 19: Endzapfen
- 20: Querträger
- 21: Rücksprung
- 22: Wicklungsanfang
- 23: Wicklungsende
- 24: Kontaktzunge
- 25: Klemmzunge
- 26: Zusatzausleger
- 27: Führungsmittel
- 28: Zentrale Ausnehmung
- 29: Versteifungsring
- 30: Busring
- 31: Ausbuchtung
- 32: Aufnahme
- 33: radiale Freisparung
- 34: axiale Freisparung
- 35: Führungskontur
- 36: Abstandhalter
- 37: Schmelzgut
- 38: Biegekante
- 39: Endkappe
- 40: Wicklungsdrahtbereich

## Patentansprüche

1. Stator (1) eines Elektromotors mit einem Statorkern (2) mit mehreren ausgeprägten Statorpolen (3), einer Isolierkappe (4), einer aus einem Wicklungsdraht (5) bestehenden Statorwicklung (6) und einem Verschaltungsmittel (7) mit mehreren Wicklungsdraht-Aufnahmen (8), **dadurch gekennzeichnet, dass** der Wicklungsdraht (5) von dem Material einer Wicklungsdraht-Aufnahme (8) umgeben und mit diesem innig verbunden und verschweißt ist.

2. Stator nach Anspruch 1, **dadurch gekennzeichnet, dass** das Verschaltungsmittel (7) aus einem Kontaktblech besteht.

3. Stator nach Anspruch 2, **dadurch gekennzeichnet, dass** der Wicklungsdraht (5) in der Blechebene von dem Material der Wicklungsdraht-Aufnahme (8)vollumfänglich umgeben und verschweißt ist, wobei der Wicklungsdraht (5) die Blechebene über die volle Blechdicke durchdringt.

4. Stator nach Anspruch 1, 2 oder 3, **dadurch gekennzeichnet, dass** der Stator (1) mehrphasig ausgeführt ist und je Phase ein Verschaltungsmittel (7) vorgesehen ist, wobei die Verschaltungsmittel (7) voneinander elektrisch isoliert sind.

5. Stator nach Anspruch 1, 2, 3 oder 4, **dadurch gekennzeichnet, dass** jedes Verschaltungsmittel (7) mit einem Anschluss (9) elektrisch und mechanisch verbunden ist.

6. Stator nach Anspruch 1, 2, 3, 4 oder 5, **dadurch gekennzeichnet, dass** ein oder mehrere Verschaltungsmittel (7) durch ein Trägermittel (10) gehalten sind.

7. Stator nach Anspruch 6, **dadurch gekennzeichnet, dass** mehrere Verschaltungsmittel (7) elektrisch voneinander isoliert auf einem Trägermittel (10) aufgenommen und fixiert sind.

8. Stator nach zumindest einem der vorangehenden Ansprüche, **dadurch gekennzeichnet, dass** mehrere identisch oder unterschiedlich ausgebildete Verschaltungsmittel (7) vorhanden sind.

9. Verfahren zur Herstellung eines Stators eines Elektromotors mit einem Statorkern (2) mit mehreren ausgeprägten Statorpolen (3), einer Isolierkappe (4), einer aus einem Wicklungsdraht (5) bestehenden Statorwicklung (6) und einem Verschaltungsmittel (7) mit mehreren Wicklungsdraht-Aufnahmen (8), **gekennzeichnet durch** folgende Verfahrensschritte:
a) Bereitstellen eines Statorkerns (2), einer Isolierkappe (4), einer Endkappe (39), eines Wicklungsdrahts (5), eines Trägermittels (10) und eines Verschaltungsmittels (7) oder einer Verschaltungseinheit mit integriertem Trägermittel und Verschaltungsmittel, einer Wickeleinrichtung und einer Laserschweißeinrichtung;
b) Montage der Isolierkappe (4) und der Endkappe (39)auf jeweils einen axialen Endbereich (11) des Statorkerns (2));
c) Bewickeln eines Statorpols (3) des Stators (1) mit dem Wicklungsdraht (5), wobei der Wicklungsdraht (5) zwischen zwei Polen mit einer radialen Komponente über den Durchmesser des Statorkerns hinaus um einen Ausleger (16) herum und unter Bildung einer Leiterschleife (12) winkelversetzt zu einem nachfolgend zu bewickelnden Statorpol (3) radial nach innen geführt wird;
d) Abisolieren von Wicklungsdrahtbereichen (40) der Leiterschleife (12) unter in Positionshalten und freie Zugänglichkeit durch den Ausleger (16).
e) lagerichtige Montage des Trägermittels (10) und des Verschaltungsmittels (7) oder der Verschaltungseinheit mit integriertem Trägermittel und Verschaltungsmittel, wobei die Winkellage der Wicklungsdraht-Aufnahmen (8) den Winkellagen des nach außen bzw. nach innen verlaufenden Wicklungsdrahts entspricht;
f) Biegen der Leiterschleife (12) unter Zuhilfenahme Trägermittel (10) radial nach innen, bis die Wicklungsdrahtbereiche (40) der Leiterschleifen (12) in durch Kontaktzungen (24) begrenzte Wicklungsdraht-Aufnahmen (8) des Verschaltungsmittels (7) eingreifen;
g) Erhitzen der Kontaktzungen (24) beiderseits der Wicklungsdraht-Aufnahme (8) vor, nach oder während dem Trennen der Leiterschleife (12) mittels Laserstrahl bis diese schmelzen und sich das Schmelzgut (37) innig mit dem Wicklungsdraht (5) verbindet und verschweißt;
h) Vorheriges oder anschließendes Entfernen eines oder mehrerer Ausleger (16) gleichzeitig oder nacheinander oder des Hilfsmittels zur temporären Unterstützung der Leiterschleife (12) ;
i) Montage weiterer Bauelemente oder Baugruppen;

10. Verfahren nach Anspruch 9, **dadurch gekennzeichnet, dass** die Leiterschleife (12) während des Schweißvorgangs radial nach innen in die Wicklungsdraht-Aufnahme (8) anliegend gehalten wird.

11. Verfahren nach Anspruch 9, **dadurch gekennzeichnet, dass** zusätzlich Isolierringe bereitgestellt werden, wobei nach der Montage des ersten Verschaltungsmittels (7) abwechselnd Isolierringe und weitere Verschaltungsmittel (7) aufeinandergeschichtet werden.

12. Verfahren nach Anspruch 9 oder 10, **dadurch gekennzeichnet, dass** das Trägermittel (10) und mehrere Verschaltungsmittel (7) zu einer Baugruppe vorgefertigt werden.

13. Verfahren nach Anspruch 14, **dadurch gekennzeichnet, dass** das Trägermittel (10) und mehrere Verschaltungsmittel (7) zur Bildung einer Baugruppe umspritzt werden.

14. Verfahren nach Anspruch 14, **dadurch gekennzeichnet, dass** mehrere Verschaltungsmittel (7) umspritzt werden und dabei das Trägermittel (10) geformt wird.
